# EUROPEAN PATENT APPLICATION

(11) **EP 1 703 639 A1**
(43) Date of publication of application: **20.09.2006**
(21) Application number: 05290565.0
(22) Date of filing: 15.03.2005
(51) Int. Cl.: H03K 17/06, H01H 47/32, H05B 6/68, H02M 5/00

(54) **Controller device for power circuit with improved security**

(71) Applicant: Genbond Enterprises Ltd., Kowloon (HK)
(72) Inventor: Leung, Chiu Yin, Unit 2508, 25F Greenfield Tower, Tsim Sha Tsui East, Kowloon (HK)
(74) Representative: Plaçais, Jean Yves

(57) **Abstract**

Controller device (1) for controlling a power circuit, for example of a microwave oven, comprising a first control circuit (3), capable of controllably energizing a first part of the power circuit, responsive to a first energization signal, and a micro-controller (17) for delivering a first control signal, said first energization signal being derived from said first control signal. Said first control signal is an AC first control signal. The controller device further comprises an adaptator circuit (21;23) coupled between said micro-controller (17) and said first control circuit (3), for defining said first energization signal by accumulating portions of said AC first control signal.

## Description

The present invention relates to a controller device for controlling a power circuit.

Controller devices and power circuits are well-known. Applications including a power circuit controlled by a controller device are numerous.

A controller device typically comprises at least one control circuit capable of controllably energizing one part of the power circuit, responsive to an energization signal.

Today, a micro-controller is often included in the controller device for delivering a control signal based on statements of a microprogram and/or input signals. In this case, said energization signal is derived from control signal delivered by micro-controller.

In a microwave oven, for example, a power circuit is arranged which includes a first part operating a magnetron i.e the main heating element of the microwave oven. This power circuit is controlled by a controller circuit which can establish various operating conditions for the magnetron, for example by varying power or operation length.

Typical problem with co-operating power circuits and controller devices is that part of the power circuit can be energized by failure of a component of the controller device. Thus, failure in the controller device may result in operation of power component under uncontrolled conditions.

In the above-mentioned case of a micro-wave oven, a failure of the controller device may result in unwanted and dangerous operation of magnetron and/or other heating element (grill tube for example).

One object of the present invention is to solve the above-exposed problem. This object is achieved by providing a controller device for controlling a power circuit, comprising a first control circuit, capable of controllably energizing a first part of the power circuit, responsive to a first energization signal, and a micro-controller for delivering a first control signal, said first energization signal being derived from said first control signal, wherein said first control signal is an AC first control signal, and the controller device further comprises an adaptator circuit coupled between said micro-controller and said first control circuit, for defining said first energization signal by accumulating portions of said AC first control signal.

Thus, said first part of the power circuit can be energized only if said first energization signal is applied to first control signal. Because this first energization signal is derived from an AC first control signal, said first part of the power circuit can be energized only if said adaptator circuit operates properly. Consequently, first part of power circuit may not be energized in the case of failure of a component of said controller device.

Other alternative features and advantages of the invention will appear in the detailed description below and in the appended drawings and exhibit, in which :
Figure 1 is a circuit diagram illustrating an embodiment of a controller circuit according to the invention;
Figure 2 is a block diagram illustrating an example of implementation of controller circuit shown in Figure 1; and
Figure 3 is circuit diagram of a particular implementation of circuit shown in Figure 2.

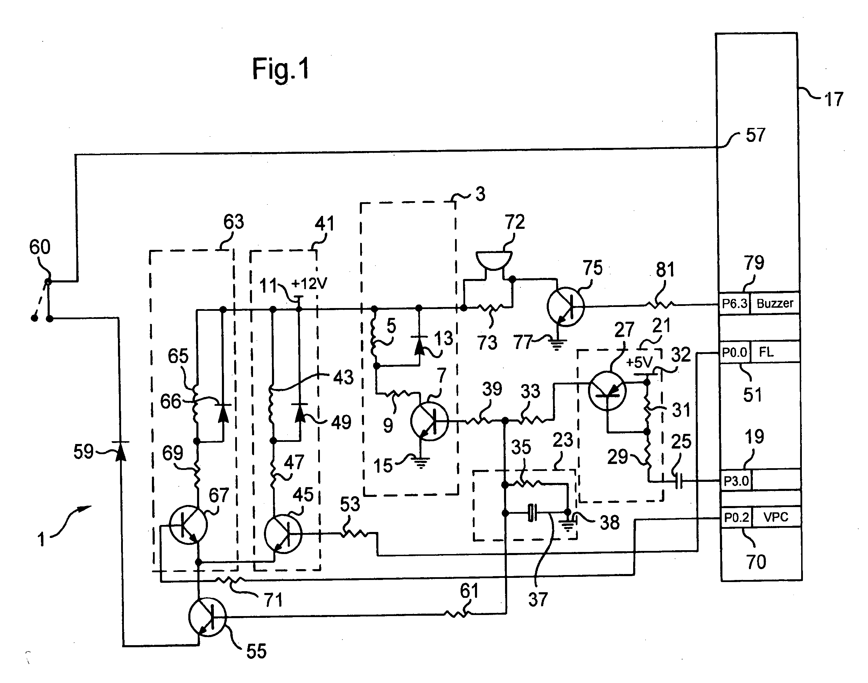

Exhibit 1 is a table listing the preferred numerical values of the components of controller circuit shown in Figure 1.

Figure 1 illustrates a controller circuit 1 according to the invention. Controller circuit 1 comprises a first control circuit 3 capable of controllably energizing a first part of a power circuit to be controlled.

First control circuit 3 essentially consists of a first relay 5 and a first transistor 7. First relay 5 is coupled at one end to collector of first transistor 7 through a resistor 9. To the other end, first relay 5 is coupled to a DC power line 11, for example at 12V. Additionally, first relay 5 is coupled in parallel to a diode 13. Emitter of first transistor 7 is coupled to ground 15. Base of first transistor 7 is coupled to the rest of the control circuit 1.

Depending upon the voltage applied to base-emitter junction of first transistor 7, first relay 5 is either energized or not with respect to a threshold, thus energizing or not said first part of the power circuit.

Controller circuit 1 further comprises a micro-controller 17 capable of outputting an AC first control signal to one of its pins. In this embodiment, micro-controller 17 is capable of outputting a square wave signal at a pin 19 of an I/O port (with respect to a reference voltage, e.g ground). In a particular embodiment, micro-controller 17 is a S3P70F4XZZ-AVB4 micro-controller manufactured by Samsuhg, which can output said AC first control signal at pin P3.0 of I/O port 3 (i.e pin number 15 in the whole micro-controller).

Between micro-controller 17 and first control circuit 3, an adaptor circuit is arranged, which essentially consists of an amplifier section 21 and a rectifier section 23. The amplifier section 21 is coupled to pin 19 of micro-controller 17 through a coupling capacitor 25. Coupling capacitor 25 eliminates the discrete component from the signal output by micro-controller 17.

Amplifier section 21 essentially consists of a two series-coupled resistors assembly and of a transistor 27. Base of transistor 27 is coupled to middle point of said two series-coupled resistors assembly. Resistor assembly comprises a resistor 29 coupled to coupling capacitor 25 and a resistor 31 coupled to a DC power line 32, for example at 5V. Emitter of transistor 27 is coupled to resistor 31. Collector of transistor 27 is coupled to the rectifier section 23 through a resistor 33.

Rectifier section 23 essentially consists of a RC parallel assembly comprising a resistor 35 and a capacitor 37. At one end, said RC assembly is coupled to ground 38. At the other end, RC assembly is coupled to both base of first transistor 7 through a resistor 39, and collector of transistor 27 through resistor 33.

When micro-controller 17 outputs a square wave control signal, amplifier section 21 and rectifier section 23 works together so as to apply an appropriate energization signal to the base-emitter junction of first transistor 7, with regard to the threshold voltage of transistor 7, i.e a generally discrete signal at a voltage level higher than threshold voltage, thus energizing first relay 5. Consequently, said first part of the power circuit is energized when micro-controller 17 outputs first control signal.

In case of failure of any one of the components of the rectifier section 23, amplifier section 21 or coupling capacitor 25, first relay 5 could not be energized because the correct threshold voltage is not applied to first transistor 7. Consequently, first part of the power circuit may not be energized by failure of a component of the controller circuit 1.

The controller circuit 1 further comprises a second control circuit 41 similar to first control circuit 3. Second control circuit 41 essentially consists of a second relay 43 and a second transistor 45. Collector of second transistor 45 is coupled to second relay 43 through a resistor 47. Second relay 43 is also coupled to DC power line 11. A diode 49 is coupled in parallel to second relay 43. Base of second transistor is connected to a pin 51 of a second I/O port of micro-controller 17 through a resistor 53. Second I/O port is capable of outputting a DC signal. For example, base of second transistor 45 is coupled to pin P0.0 of port I/O 0 of micro-controller 17 (i.e pin number 8 in the whole micro-controller).

When second control signal is output, the voltage level applied to the base-emitter junction of second transistor 45 is higher than the threshold voltage. Consequently, second relay 43 can be energized.

Emitter of second transistor 45 is coupled to collector of an additional transistor 55. Emitter of additional transistor 55 is coupled to a ground pin 57 (for example pin number *1*) of micro-controller 17 through a diode 59 and an optional switch 60. Base of additional transistor is coupled between resistor 39 and resistor 33 through a resistor 61. Depending upon the voltage level at the base-emitter junction of additional transistor 59, second relay 43 can be either energized or not. Consequently, an appropriate second energization signal and an appropriate additional energization signal have to be applied to the base-emitter junction of respectively second transistor 45 and additional transistor 55 for energizing second relay 43.

Controller circuit 1 further comprises a third control circuit 63 similar to both first control circuit 3 and second control circuit 41. Third control circuit 63 essentially consists of a third relay 65 coupled to collector of a third transistor 67 through a resistor 69. Third relay 65 is coupled in parallel to a diode 66. Base of third transistor 67 is coupled to a pin 70 of a third I/O port of micro-controller 17, for example pin P0.2 of port I/O 0 (i.e pin number 10in the whole micro-controller), through a resistor 71. Third I/O port is capable of outputting a third DC control signal for energizing third relay 65, i.e a third energization signal. Emitter of third transistor 67 is coupled to collector of additional transistor 55. As explained above, appropriate voltages have to be applied to base-emitter junction of both third transistor 67 and additional transistor 55 for energizing third relay 65. In other words an appropriate third energization signal and an appropriate additional energization signal have to be applied to the base-emitter junction of respectively third transistor 67 and additional transistor 55 for energizing third relay 65.

Consequently, second and/or third part of power circuit may not be energized by failure of one of the components of said second control circuit 41 or third control circuit 63 nor by failure of any component of rectifier section 23 or amplifier section 21.

Additionally, the controller circuit 1 is provided with an optional buzzer 72 coupled in parallel to a resistor 73. At one end, buzzer 72 is coupled to DC power line 11. At the other end buzzer 72 is coupled to collector of a transistor 75, which emitter is coupled to ground 77 and which base is coupled to a dedicated pin 79 of one port of micro-controller 17 (for example, pin P6.3) through a resistor 81.

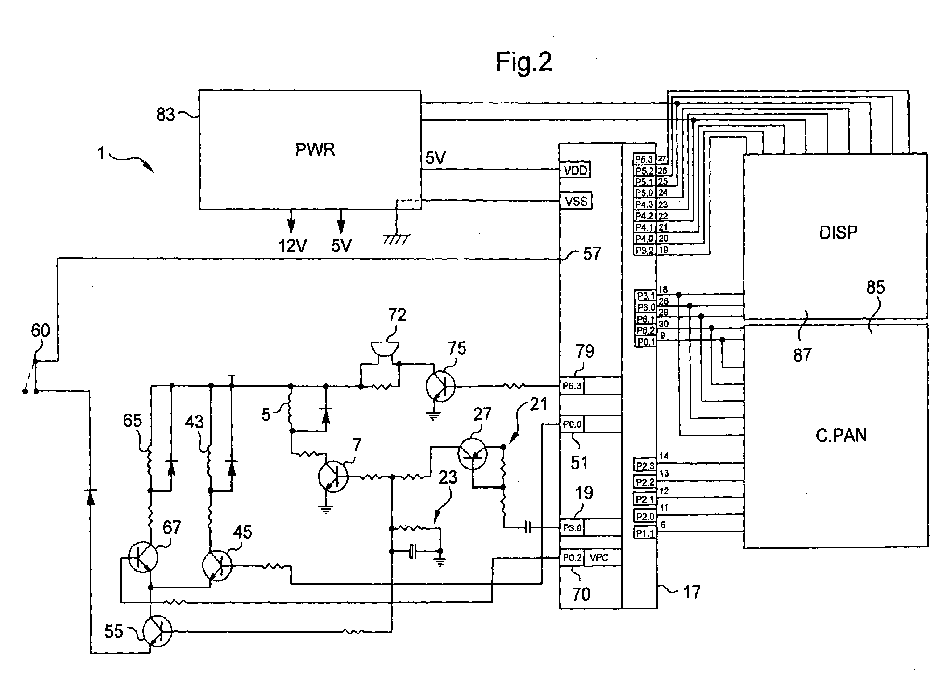

Figure 2 is a block diagram illustrating an example of implementation of controller circuit 1 shown in figure 1.

Controller circuit 1 can be provided with a power supply PWR 83 coupled to micro-controller 17. Power supply PWR 83 includes for example an AC to DC converter capable of delivering 5V and 12V voltages. For example, ground is coupled to a VSS pin of micro-controller 17 (i.e pin 1 in the whole micro-controller) and 5V to a VDD pin (i.e pin 32 in the whole micro-controller).

Optionally, controller circuit 1 can be provided with a control panel C.PAN 85 coupled to micro-controller 17 for entering input data. Control panel C. PAN 85 can be coupled to pins of one or more I/O ports of micro-controller 17. Controller circuit 1 can be further provided with a digital display DISP 87 coupled to micro-controller 17 and to control panel C.PAN 85 for displaying information about input data and micro-controller 17 conditions or any other information. Optionally, display DISP 87 can be coupled to power supply PWR 83.

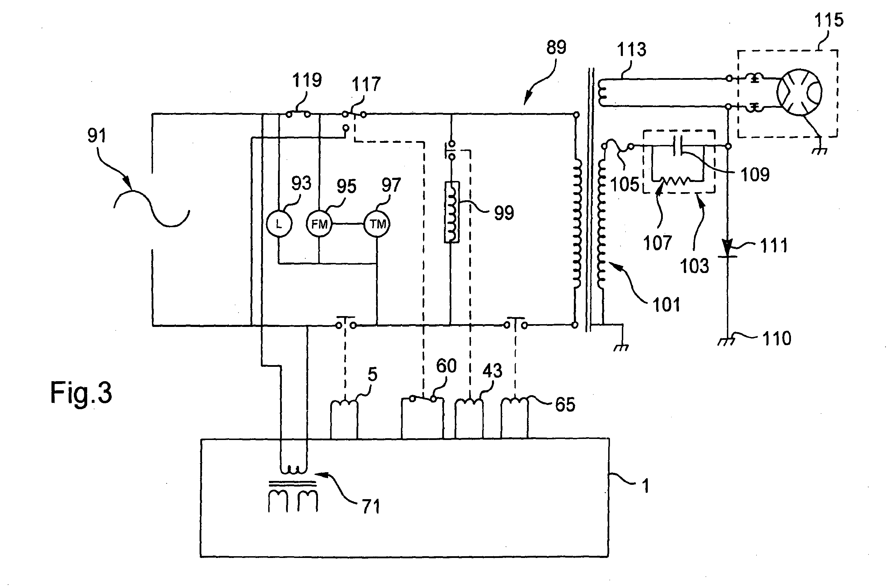

Figure 3 illustrates a particular implementation of controller circuit 1. In this implementation, controller circuit 1 is associated with a power circuit 89 of a microwave oven.

Power circuit 89 comprises an AC power supply 91, for example a 230 V at 50 Hz power supply plugged into the mains. An AC to DC converter, for example AC to DC converter of power supply PWR 83 shown in Figure 2, is coupled in parallel to power circuit 89 for powering controller circuit 1.

Power circuit 89 further comprises a lamp L 93 for lighting the inside of the oven, a fan motor FM 95 for rotating a fan arranged inside and a table motor 97 for rotating a support table. Lamp 93 and fan motor 95 are coupled in parallel to power supply.91. Table motor 97 is coupled at one end to the 30V output of fan motor FM 95 and to the neutral line of the power supply 91 at the other end. First relay 5 is coupled between power supply 91 and lamp 93, fan motor 95 and table motor 97 assembly.

Power circuit 89 further comprises a grill tube 99 coupled in parallel to power supply 91. Second relay 43 is coupled in series to grill tube 99.

Power circuit 89 further comprises a high voltage transformer 101, which is coupled in parallel to power supply 91. Between power supply 91 and high voltage transformer 101 is coupled third relay 65. More precisely, third relay 65 is coupled at one end to high voltage transformer 101 and at the other end to grill tube 99. On the high voltage side, high voltage transformer 101 is coupled at a first winding to one end of a parallel RC circuit 103 through a shunt 105. RC circuit 103 comprises a resistor 107 and a high voltage capacitor 109. At the other end, RC circuit 103 is coupled to ground 110 through a diode 111.

On high voltage side of high voltage transformer 101, a second winding 113 is arranged. A magnetron 115 is coupled in parallel to second winding 113, one end of magnetron 115 being coupled to both diode 111 and RC circuit 103.

Optionally, a commutator 117 is coupled between the lamp 93, fan motor 95 and table motor 97 assembly and second relay 43. When commutator 117 is in a first condition, current can pass from lamp 93, fan motor 95 and table motor 97 assembly to the rest of power circuit 89. When commutator 117 is in a second condition, said rest of power circuit 89 (including magnetron 115 and grill tube 99) are short-circuited. Commutator 117 is controlled by switch 60.

Second relay 43 controls (i.e either energizes or not) grill tube 99. Third relay 65 controls magnetron 115 through high voltage transformer 101. First relay controls lamp 93, fan motor 95, table motor 97 tube grill 99 and magnetron 115 together : either lamp 93, fan motor 95, table motor tube grill 99 and magnetron 115 can be energized or they can not be energized. Commutator 117 allows lamp 93, fan motor 95, table motor 97 to be energized without energizing of grill tube 99 and magnetron 115. In a particular embodiment, switch 60 is a door switch. Thus lamp 93, fan motor 95 and table motor 97 can be energized when door is open whereas tube 99 and magnetron 115 can not. Optionally, a switch 119 is coupled between lamp 93 and fan motor 95 so as to light inside the oven without rotating fan and table.

The power circuit 89 of Figure 3 was described by way of example only. Other implementations of controller circuit 1 may be considered.

Exhibit 1 lists the numerical values or manufacturing references of the components of controller circuit 1 for a particular embodiment.

A number of features have been positively described, using absolute language, to help understanding the examples being described. Each such feature should be considered as exemplary only, and is not intended to restrict the scope of this invention in any way.

Exhibit 1 - Preferred numerical values or manufacturing references of the electonic components of controller circuit shown in Figure 1.

| First relay 5 | JD2-1A ; 16 A ; 250 V |
|---|---|
| First transistor 7 | KTC3198 |
| Resistor 9 | 20 Ω |
| Diode 13 | IN4148 |
| Micro-controller 17 | S3P70F4XZZ-AVB4 |
| Coupling capacitor 25 | 1 µF ; 25 V |
| Transistor 27 | 2SA1266 |
| Resistor 29 | 4.7 kΩ |
| Resistor 31 | 10 kΩ |
| Resistor 33 | 510 Ω |
| Resistor 35 | 10 kΩ |
| Capacitor 37 | 10 µF ; 25 V |
| Resistor 39 | 4.7 kΩ |
| Second relay 43 | JD2-1A ; 16 A ; 250 V |
| Second transistor 45 | KTC3198 |
| Resistor 47 | 15 Ω |
| Diode 49 | IN4148 |
| Resistor 53 | 4.7 kΩ |
| Additional transistor 55 | KTC3198 |
| Diode 59 | IN4148 |
| Resistor 61 | 4.7 kΩ |
| Third relay 65 | JD2-1A ; 16 A ; 250 V |
| Diode 66 | IN4148 |
| Third transistor 67 | KTC3198 |
| Resistor 69 | 15 Ω |
| Resistor 71 | 4.7 kΩ |
| Buzzer 72 | WSD22EPT-2001 |
| Resistor 73 | 5.1 kΩ |
| Transistor 75 | KTC3198 |
| Resistor 81 | 4.7 kΩ |

## Claims

1. Controller device (1) for controlling a power circuit, comprising:
- a first control circuit (3), capable of controllably energizing a first part of the power circuit, responsive to a first energization signal, and
- a micro-controller (17) for delivering a first control signal, said first energization signal being derived from said first control signal,
**characterized in that**:
- said first control signal is an AC first control signal, and
- the controller device further comprises an adaptator circuit (21;23) coupled between said micro-controller (17) and said first control circuit (3), for defining said first energization signal by accumulating portions of said AC first control signal.

2. The controller device of Claim 1, wherein said first control circuit (3) comprises:
- a first transistor (7) and a first relay (5) coupled to interact for controllably energizing said first part of the power circuit, depending upon the situation of said first energization signal applied to the first transistor (7) with respect to a threshold.

3. The controller device of Claim 1 or 2, further comprising:
- a second control circuit (41), capable of controllably energizing a second part of the power circuit, responsive to a second energization signal,
- the micro-controller (17) being capable of delivering a second control signal, said second energization signal being derived from said second control signal,
**characterized in that**:
- the controller device further comprises an additional control circuit (55), capable of controllably energizing the second control circuit (41), responsive to an additional energization signal,
- the adaptator circuit (21;23) being coupled between said micro-controller (17) and said additional control circuit (55) for defining said additional energization signal by accumulating portions of said AC first control signal.

4. The controller device of Claim 3, wherein said second control circuit (41) comprises:
- a second transistor (45) and a second relay (43) coupled to interact for controllably energizing said second part of the power circuit, depending upon the situation of said second energization signal applied to the second transistor (45) with respect to a threshold.

5. The controller device of Claim 4, wherein said additional control circuit (55) comprises:
- an additional transistor (55) coupled to the second control circuit (41) for controllably energizing said second control circuit (41) depending upon the situation of said additional energization signal applied to the additional transistor (55) with respect to a threshold.

6. The controller device of Claim 3, 4 or 5, further comprising:
- a third control circuit (63), capable of controllably energizing a third part of the power circuit, responsive to a third energization signal,
- the micro-controller (17) being capable of delivering a third control signal, said third energization signal being derived from said first control signal,
**characterized in that**,
- the additional control circuit (55) is coupled to said third control circuit (63),
- the additional control circuit (55) being capable of controllably energizing the third control circuit (63), responsive to said additional energization signal.

7. The controller device of Claim 6, wherein said third control circuit comprises:
- a third transistor (67) and a third relay (65) coupled to interact for controllably energizing said third part of the power circuit, depending upon the situation of said third energization signal applied to the third transistor (67) with respect to a threshold.

8. The controller device of any preceding Claims, wherein said adaptator circuit (21;23) comprises an amplifier section (21) and an rectifier section (23).

9. The controller device of Claim 8, wherein the amplifier section (21) comprises:
- a two series-coupled resistor assembly (29;31), and
- a PNP transistor (27), and
- base of said PNP transistor (27) being coupled to middle point of said two series-coupled resistor assembly (29;31), emitter of said PNP transistor (27) being coupled to the two series-coupled resistor assembly (29;31) and to a power line (32).

10. The controller device of Claim 7 or 8, wherein the rectifier section (23) comprises:
- a parallel RC assembly (35;37),
- the parallel RC assembly (35;37) being connected to a power line 38.

11. The controller device of Claim 10, wherein base of said first transistor (7) is coupled to said parallel RC assembly (35;37) through a resistor (39).

12. The controller device of Claim 11, wherein base of said additional transistor (55) is coupled to said parallel RC assembly (35;37) through a resistor (61).

13. The controller device of Claim 9, wherein collector of said PNP transistor (27) in coupled to said parallel RC assembly (35;37) through a resistor (33).

14. The controller device of Claim 5, wherein collector of said additional transistor (55) is coupled to both emitter of said second transistor (45) and emitter of said third transistor (67).

15. The controller device of any one of the preceding Claims, wherein said power circuit is a power circuit of a microwave oven, said first part of the power circuit being capable of energizing a magnetron (115) and a grill tube (99), said second part of the power circuit being capable of energizing the magnetron (115) and said third part of the power circuit being capable of energizing the grill tube (99).
